**Europäisches Patentamt**

**European Patent Office**

**Office européen des brevets**

(19)

(11) Veröffentlichungsnummer: **0 073 266**
A1

(12)

# EUROPÄISCHE PATENTANMELDUNG

(21) Anmeldenummer: 81106813.9

(22) Anmeldetag: 01.09.81

(51) Int. Cl.³: **C 02 F 3/12,** C 02 F 3/06, C 02 F 3/10

(43) Veröffentlichungstag der Anmeldung: 09.03.83 Patentblatt 83/10

(84) Benannte Vertragsstaaten: AT BE CH DE FR GB IT LI LU NL SE

(71) Anmelder: Messner, Rudolf, Laufer Mühle, D-8551 Adelsdorf (DE)

(72) Erfinder: Messner, Rudolf, Laufer Mühle, D-8551 Adelsdorf (DE)

(74) Vertreter: Schweinzer, Karl, Dr. Dipl.-Phys., Patentanwälte Dipl.-Ing. H. Stehmann Dipl.-Phys. Dr. K. Schweinzer Essenweinstrasse 4-6, D-8500 Nürnberg 70 (DE)

(54) Vorrichtung zum biologischen Reinigen von Abwasser und Verfahren zum Betrieb einer biologischen Abwasserreinigungsanlage.

(57) Vorrichtung und Verfahren zum biologischen Reinigen von Abwasser nach dem Belebtschlammverfahren mit einem rechteckigen Belüftungsbecken (1), in dem eine Anzahl von Belüftungseinrichtungen (26) und von höhenverstellbarer, quer zur Strömungsrichtung des Abwassers angelegter Trennwände (5) angeordnet ist. Die Trennwände (5) bestehen aus einem auf Rahmen gespannten technischen Gewebe (Filtergewebe). Zwischen der Unterkante jeder Trennwand (5) und dem Boden (10) des Belebtschlammbeckens (1) bleibt ein einstellbarer Durchflußquerschnitt für das Abwasser frei. Die Abstände zwischen den aufeinanderfolgenden Trennwänden (5) sind im wesentlichen gleich groß, so daß in Flußrichtung des Abwassers in den durch die Trennwände (5) gebildeten Kammern (12–17) der $O_2$-Gehalt gleich bleibt oder stufenweise zunimmt und der Trockensubstanzgehalt (TS) stufenweise abnimmt. Der $O_2$-Gehalt in den Kammern (12–17) wird gemessen und gesteuert.

EP 0 073 266 A1

Vorrichtung zum biologischen Reinigen von Abwasser
und Verfahren zum Betrieb einer biologischen Abwasserreinigungsanlage

-----------------------------------------------------------

Die Erfindung betrifft eine Vorrichtung zum biologischen
Reinigen von Abwasser nach dem Belebtschlamm-Verfahren
mit einem Belüftungsbecken, wobei das Becken eine
längliche rechteckige Form aufweist, mit einem Einlaß- und einem Auslaßende, Zufuhreinrichtungen für
Abwasser und eine Anzahl von Belüftungseinrichtungen
längs des Beckens zwischen Einlaß- und Auslaßende angeordnet zum Belüften des über die Länge des Beckens
vom Einlaßende zum Auslaßende strömenden Abwassers und
mit einer Anzahl Trennwände, sowie ein Verfahren zum
Betrieb einer biologischen Abwasserreinigungsanlage.

Eine Vorrichtung der oben definierten Art ist bereits
im wesentlichen aus der DE-OS 26 39 252 bekannt, bei
der eine Anzahl von gestaffelten Trennwänden verwendet wird, die sich nur teilweise über die Breite des
Strömungsweges zwischen den Belüftungseinrichtungen
erstrecken und hierdurch eine Anzahl von Flüssigkeitszonen bilden, durch welche die Flüssigkeitsmischung
in allgemein schlangenförmiger Art von einer nicht vollständig durchmischten Zone zur nächsten strömt. Diese bekannte Vorrichtung ist relativ aufwendig und
kompliziert ausgebildet, da jede Flüssigkeitszone von zwei verschiedenartig ausgebildeten Trennwänden begrenzt sein muß, wodurch auch der Einbau derartiger Trennwände innerhalb des Belüftungstanks verteuert wird.

Es ist ferner aus der DE-OS 25 32 682 eine Vorrichtung zum biologischen Reinigen eines Abwassers bekannt, bei der ein Belüftungsbecken mit einer im Abstand von der Abwasseroberfläche angeordneten Abdeckung vorgesehen ist, und der von dieser Abdeckung und der Abwasseroberfläche eingeschlossene Raum mittels quer zur Fließrichtung des Abwassers angeordneten Trennwänden in eine Anzahl Kammern unterteilt ist, deren jede einen Belüfter aufweist. Durch eine solche Anordnung soll es ermöglicht werden, die im Bereich des Belüftungsbeckens infolge der starken Umwälzbewegung des Abwassers entweichenden übelriechenden Gase zu beseitigen, indem diese aus den durch die Trennwände gebildeten, einzelnen Gasräumen abgesaugt werden.

Schießlich ist aus dem DE-GM 73 21 766 eine Vorrichtung zur Einstellung des Durchflusses durch Kläranlagen bekannt, die aus hintereinander oder parallel angeordneten Becken besteht und deren Trennwände zumindest teilweise höhenverstellbar sind, wobei diese Trennwände durch jalousieartige, miteinander koppelbare Elemente gebildet sind. Durch die in Führungen höhenverstellbar bewegbaren Trennwände soll die Steuerung des Durchflusses vom Einlauf zum Ablauf jedes Beckens durch Einstellung des jeweiligen Abstandes der Trennwände zum Boden des Beckens bzw. zu der Wasserlinie und/oder durch Entfernung einzelner Jalousie-Elemente aus der Trennwand ermöglicht werden.

In herkömmlichen Belebtschlammbecken wird der gesamte Belebtschlamm nach einer gewissen Aufenthaltszeit im Belebungsbecken in ein Nachklärbecken geleitet. Dort setzt sich der Belebtschlamm ab und wird entweder als Rücklaufschlamm in das Belebungsbecken zurückgepumpt oder wird als Überschußschlamm abgepumpt. Nachteilig bei diesem Verfahren ist, daß für die Schlammpumpen ein relativ hoher Energieaufwand benötigt wird. Ferner besteht im Nachklärbecken für den Schlamm keine Sauerstoffversorgung. Deshalb stirbt ein Teil der Mikroorganismen des Belebtschlammes ab, da der Schlamm mehrere Stunden im Nachklärbecken bleibt. Der Rücklaufschlamm muß dann im Belebungsbecken durch intensives Belüften erst wieder aktiviert werden. Durch das Umpumpen des Belebtschlammes wird die Schlammflockenstruktur beeinträchtigt. Schließlich werden relativ große Nachklärbecken benötigt.

Ausgehend von einer Vorrichtung der eingangs definierten Art liegt nun der vorliegenden Erfindung die Aufgabe zugrunde, eine verbesserte Vorrichtung zur biologischen Abwasserreinigung anzugeben, die sich insbesondere durch sehr hohe Reinigungsleistung, große Betriebssicherheit und außerordentliche Wirtschaftlichkeit hinsichtlich Bau- und Betriebskosten auszeichnet.

Diese Aufgabe wird bei einer Vorrichtung der eingangs erläuterten Art , gemäß der Erfindung dadurch gelöst, daß die Trennwände aus einem auf Rahmen gespannten technischen Gewebe (Filtergewebe) bestehen, daß die das technische Gewebe spannenden Rahmen höhenverstellbar quer zur Strömungsrichtung des Abwassers je über die gesamte Breite des Beckens reichend angeordnet sind, daß zwischen Unterkante der höhenverstellbaren Trennwand und dem Boden des Belebtschlammbeckens ein einstellbarer Durchflußquerschnitt für das Abwasser freibleibt, daß die Rahmen gegenüber den Beckenseitenwänden Dichtungsmittel aufweisen, daß die Belüftungsmittel aus am Boden des Belüftungsbeckens angeordneten Plattenbelüftern bestehen, die zumindest über den ganzen Querschnitt des Beckens eine gleichmäßige, feinblasige $O_2$-bzw. Luftzufuhr ermöglichen und daß die Abstände zwischen den aufeinanderfolgenden Trennwänden im wesentlichen gleich groß gewählt sind, derart, daß in Flußrichtung des Abwassers in den durch die Trennwände gebildeten Kammern der $O_2$-Gehalt gleichbleibt oder stufenweise zunimmt und der Trockensubstanzgehalt stufenweise abnimmt.

Die erfindungsgemäße Vorrichtung ermöglicht eine statische Anpassung an einen Teillastbetrieb, durch Höhenverstellung der Trennwände, je nach Belastung des Belebtschlammbeckens. Die Anlage ist Stoßbelastungen gewachsen, da in den ersten Kammern widerstandsfähige Bakterienstämme angesiedelt sind. Die Rücklaufschlammenge ist sehr gering, so daß die Pumpenkosten niedrig bleiben. Bei Belastungsschwankungen der Anlage, also bei Schwankungen der Zulaufmenge oder der Verschmutzungsrate, paßt sich die Anlage dynamisch an die jeweilige Belastung an, d. h. daß bei Belastungssteigerung der Schlammanteil von der ersten bis zu der letzten Kammer zunimmt. Bei Abnahme der Belastung (z. B. nachts) wird der höhere Schmutzgehalt wieder abgebaut. Bei Belastungssteigerung steigt auch der Sauerstoffbedarf an. Dies kann durch $O_2$-Meßgeräte festgestellt werden, worauf eine höhere Luftzufuhr erfolgt. Dadurch wird in den einzelnen Teilbecken der Schlamm stark in Schwebe gehalten. Gleichzeitig erfolgt eine intensivere Abbauung des Schlammes.

In bevorzugter Weise ist hierbei der Abstand der letzten Trennwand in Flußrichtung des Abwassers vor dem Ablaufende zur Stirnwand des Belüftungsbeckens kleiner als der Abstand zur vorhergehenden Trennwand.

Gemäß weiterer Ausgestaltung der Erfindung ist vorgesehen, daß die das technische Gewebe spannenden Rahmen an ihren Seiten-Längskanten gummielastische Dichtungslippen aufweisen. Weiterhin können vorteilhafter Weise U-förmige Führungsprofile an den Seitenwänden des Belüftungsbeckens vorgesehen sein, die zur Führung der Trennwände, d. h. der auf den Rahmen gespannten technischen Gewebe dienen.

Gemäß einer anderen Ausführungsform können aber auch die Seitenwände des Belüftungsbeckens in Abständen mit Rastausnehmungen zum Einhängen der Trennwand-Rahmen versehen sein.

Zur Höhenverstellung der Trennwände dienen vorzugsweise Stellmotore sowie kraftschlüssig zusammenwirkende Antriebsmittel, die jeweils am Stellmotor und am Trennwandrahmen vorgesehen sind.

Gemäß weiterer vorteilhafter Ausgestaltung der Erfindung ist vorgesehen, daß die Plattenbelüfter in den einzelnen durch die Trennwände gebildeten Kammern jeweils getrennte, steuerbare $O_2$- bzw. Luft-Zufuhrvorrichtungen aufweisen.

Eine Weiterbildung der Erfindung besteht darin, daß wenigstens in der ersten und/oder letzten der durch die Trennwände gebildeten Kammern Meßgeräte für den $O_2$-Gehalt des Abwassers angeordnet sind.

Schließlich kann bei der erfindungsgemäßen Vorrichtung mindestens eine oberhalb der ersten Kammer in Fließrichtung des Abwassers angeordnete Sprüh- bzw. Spritzvorrichtung vorgesehen sein, die zur Vermeidung bzw. Beseitigung einer Schaumbildung dient.

Die Erfindung betrifft ebenfalls ein Verfahren zum Betrieb einer biologischen Abwasserreinigungsanlage mit mehrstufigen Belebtschlammbecken, insbesondere einer Vorrichtung zum biologischen Reinigen von Abwasser nach der vorliegenden Erfindung.

Dieses erfindungsgemäße Verfahren kennzeichnet sich dadurch, daß in einer in Flußrichtung des Abwassers gesehenen ersten Kammer ein Trockensubstanzgehalt von etwa 20 g/l durch Steuerung der $O_2$- bzw. Luftzufuhr und durch Steuerung des Durchflußweges von der ersten Kammer zu einer zweiten Kammer, daß in einer nachfolgenden zweiten Kammer ein herabgesetzter Trockensubstanzgehalt (etwa 15 g/l), daß in einer nachfolgenden dritten Kammer ein noch weiterer herabgesetzter Trockensubstanzgehalt (etwa 10 g/l) und daß schließlich in der letzten Kammer vor dem Ablaufende ein Trockensubstanzgehalt von 1 - 2 g/l eingestellt bzw. aufrechterhalten wird, wobei der $O_2$-Gehalt in den Kammern gleichbleibt oder in Richtung zum Ablaufende zunimmt.

Gemäß einer bevorzugten Weiterbildung dieses Verfah-

rens wird der $O_2$-Gehalt in den Kammern, insbesondere in der ersten und/oder letzten Kammer gemessen und die $O_2$- bzw. Luft-Zufuhr wird in Abhängigkeit von diesen Meßwerten gesteuert, um die Sollwerte zu erreichen bzw. zu halten.

Hierbei ist es besonders günstig, wenn die $O_2$-Gehalte der einzelnen Kammern des Belüftungsbeckens in Abhängigkeit von den jeweils vorherrschenden Bakterienkulturen eingestellt werden.

Zur näheren Erläuterung der Erfindung dienen die beigefügten Zeichnungen.

Im Rahmen von Ausführungsbeispielen zeigt:

Fig. 1 einen Längsschnitt durch ein Belebtschlammbecken;

Fig. 2 einen Querschnitt durch das Belebtschlammbecken gemäß Fig. 1;

Fig. 3 eine Einzelansicht eines Teiles aus Fig. 2, nämlich den das Filtergewebe spannenden Rahmen;

Fig. 4 eine Teil-Draufsicht auf die Seitenwand eines Belebtschlammbeckens mit daran gebrachten Führungsprofilen für die Filtergeweberahmen;

und

Fig. 5 eine der Fig. 4 entsprechende Ansicht, wobei jetzt jedoch eine andere Ausführungsform für die Befestigung der Filtergeweberahmen an einer Beckenseitenwand dargestellt ist.

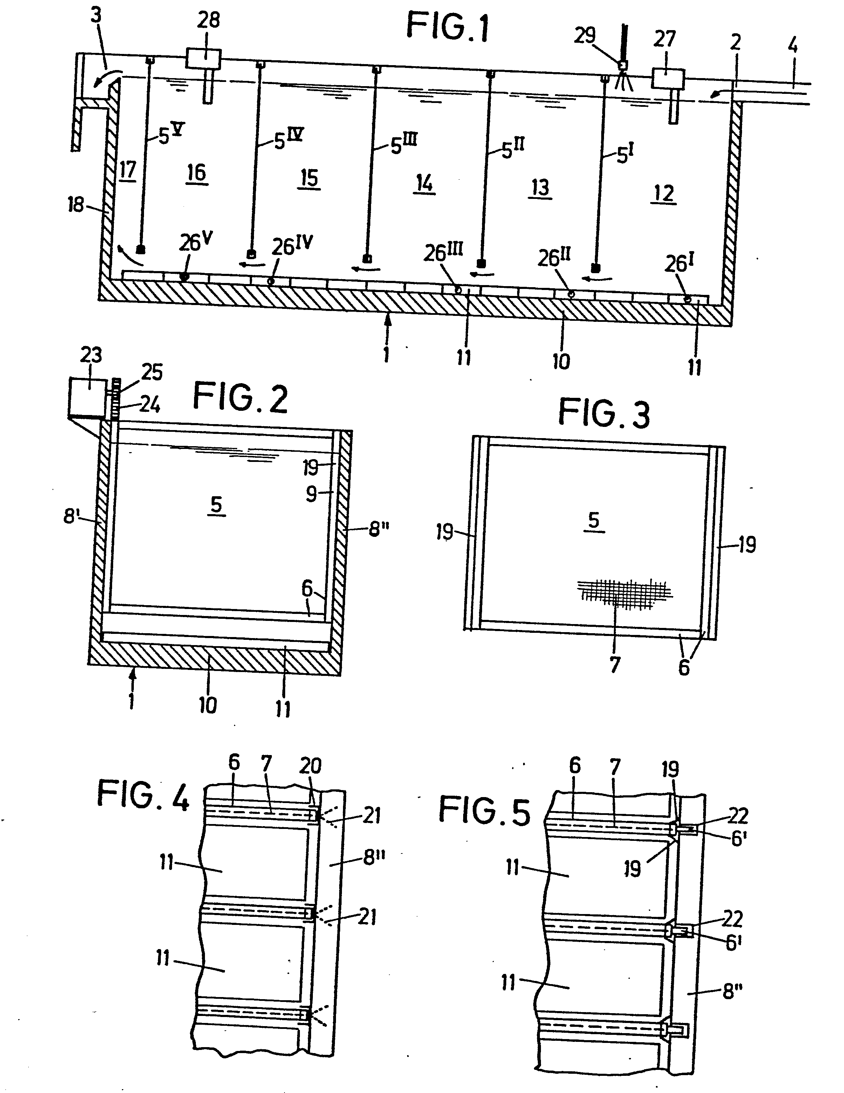

Das aus Fig. 1 in Längsschnitt ersichtliche Belebtschlammbecken 1 dient bei der biologischen Abwasserreinigung als sogenanntes Belüftungsbecken, in welches das Schmutzwasser über ein Einlaßende 2 eingeleitet wird. Nach Durchgang durch das Belüftungsbecken 1 wird das belüftete Wasser mit einer hohen Konzentration an Belebtschlamm über ein Auslaßende 3 in ein nicht dargestelltes Nachklärbecken abgeleitet.

Vor dem Einlaßende 2 des Beckens 1 ist eine im einzelnen nicht dargestellte Zuführungseinrichtung 4 für das ankommende Rohwasser angeordnet. Das gesamte Belebtschlammbecken 1, das, wie aus Fig. 2 ersichtlich ist, einen rechteckigen Querschnitt mit parallelen Seitenwänden 8' und 8" aufweist, ist mittels einer Anzahl von Trennwänden 5 in mehrere aufeinanderfolgende Kammern unterteilt, die von dem zu reinigenden Abwasser nacheinander durchlaufen werden.

Im vorliegenden Ausführungsbeispiel sind im Becken 1 insgesamt sechs Kammern, 12, 13, 14, 15, 16 und 17 gebildet, die voneinander durch Trennwände $5^I$, $5^{II}$, $5^{III}$, $5^{IV}$ und $5^V$ abgegrenzt sind, wie in Fig. 1 dargestellt ist.

Jede dieser Trennwände 5 besteht aus einem auf einen Rahmen 6 gespannten Filtergewebe 7 (technisches Gewebe), wobei es sich bei diesem Rahmen 6 beispielsweise um einen Stahlrahmen handeln kann, der an seinen Seitenlängskanten mit gummielastischen Dichtungslippen 19 versehen ist (vgl. Fig. 3).

Diese das technische Gewebe 7 spannende Rahmen 6 sind innerhalb des Beckens 1 jeweils höhenverstellbar und quer zur Strömungsrichtung des Abwassers je über die gesamte Beckenbreite reichend angeordnet. Zur Abdichtung der Rahmen 6 gegenüber den Beckenseitenwänden 8' und 8'' sind jeweils Dichtungsmittel 9 vorgesehen, bei denen es sich beispielsweise um die bereits erwähnten gummielastischen Dichtungslippen 19 handeln kann. Um die Rahmen 6 mit den Filtergeweben 7 ordnungsgemäß im Becken 1 unterbringen zu können, sind, wie die Fig. 4 beispielsweise zeigt, an den Seitenwänden 8' bzw. 8'' des Beckens 1 jeweils U-förmige Führungsprofile 20 für die Rahmen 6 angebracht, wobei die Seitenwände Verankerungen 21 für die U-förmigen Führungsprofile 20 aufweist.

Eine weitere Möglichkeit für die Befestigung der die Filtergewebe 7 spannenden Rahmen 6 im Becken 1 zeigt die Fig. 5, aus der ersichtlich ist, daß die Seitenwände 8' bzw. 8'' in Abständen mit Rastnuten 22 versehen sein können, in welche die Trennwand-Rahmen 6 jeweils einhängbar sind, wobei diese Rahmen 6 seitliche Vorsprünge 6' aufweisen.

Wie Fig. 2 weiterhin zeigt, sind im Bereich einer Seitenwand 8' oberhalb dieser Stellmotoren 23 zur Höhenverstellung der Trennwände 5 angebracht, wobei jeder Stellmotor 23 mit Antriebsmitteln 25, beispielsweise mit einem Zahnritzel, ausgestattet ist. Mit diesem Zahnritzel 25 wirkt eine am Trennwandrahmen 6 oben angebrachte Zahnstange 24 zusammen, so daß bei eingeschaltetem Stellmotor die betreffende Trennwand 5 in vertikaler Richtung verschoben werden kann.

Wie sich ferner aus der Fig. 1 entnehmen läßt, ist oberhalb der in Fließrichtung ersten Kammer 12 des Beckens 1 eine Sprüh- bzw. Spritzvorrichtung 29 vorgesehen, deren im einzelnen nicht dargestellten Spritzdüsen zur Kammer 12 hin gerichtet sind und mit deren Hilfe sich eine Schaumbildung in der Kammer 12 vermeiden bzw. beseitigen läßt.

Außerdem ist im oberen Bereich der Beckenkammer 12 ein $O_2$-Meßfühler 27 angeordnet. In entsprechender Weise ist im oberen Bereich der in Fließrichtung vorletzten Beckenkammer 16 ein $O_2$-Meßfühler 28 vorgesehen. Mittels dieser Meßfühler wird laufend der $O_2$-Gehalt des Abwasser ermittelt. Auf die vorletzte Kammer 16 folgt in Fließrichtung noch eine weitere Kammer 17, als letzte Kammer des Belüftungsbeckens, wobei diese letzte Kammer 17 zwischen der Trennwand $5^V$ und der Beckenstirnwand 18 gebildet ist. Hierbei ist außerdem der Abstand der letzten Trennwand $5^V$ in Fließrichtung vor dem Auslaßende 3 zur Beckenstirnwand 18 kleiner als der Abstand zur vorausgehenden Trennwand $5^{IV}$.

Es sind ferner zur Belüftung des im Becken 1 enthaltenen Belebtschlammes längs des Beckens zwischen Einlaß- und Auslaßende Belüftungseinrichtungen vorgesehen. Diese bestehen bei der erfindungsgemäßen Vorrichtung aus am Boden 10 des Beckens 1 angeordneten Plattenbelüftern 11, die zumindest über den gesamten Querschnitt des Beckens 1 eine gleichmäßige, fein-

blasige $O_2$- bzw. Luftzufuhr ermöglichen. Diese Plattenbelüfter 11 sind den einzelnen, durch die Trennwände $5^I$ - $5^V$ gebildeten Kammern 12 bis 17 zugeordnet und weisen jeweils getrennte, steuerbare $O_2$- bzw. Luftzufuhreinrichtungen $26^I$ bis $26^V$ auf. Durch die mittels der Plattenbelüfter 11 ermöglichte feinblasige $O_2$-Zufuhr bzw. Belüftung werden die Belebtschlammteilchen innerhalb der einzelnen Becken in der Schwebe gehalten, wodurch eine optimale Einwirkung von Luft bzw. gelöstem $O_2$ auf die Oberfläche der Belebtschlammteilen gewährleistet ist. Diese Plattenbelüfter 11 sind nicht Gegenstand der vorliegenden Erfindung, so daß auf nähere Beschreibung verzichtet werden kann.

Gleichzeitig wird hierdurch ein Absetzen des Belebtschlammes auf dem Beckenboden 10 vermieden.

Weiterhin sind die Abstäande zwischen den aufeinanderfolgenden Trennwänden $5^I$ bis $5^V$ im wesentlichen gleich groß gewählt, derart, daß in Fließrichtung des Abwassers gesehen in den durch die Trennwände gebildeten Kammern 12 bis 16 der O2-Gehalt stufenweise zu, dagegen der TS-Gehalt stufenweise abnimmt. Dies läßt sich in bevorzugter Weise dadurch realisieren, daß durch Steuerung der $O_2$- bzw. Luftzufuhr mittels der Luftzufuhrvorrichtung 26' sowie durch Steuerung des Durchflußweges von der ersten Kammer 12 zur zweiten Kammer 13 zunächst in der ersten Kammer 12 ein $O_2$-Gehalt von etwa 0,5 mg/1 und ein TS-Gehalt von etwa 20 g/1 eingestellt wird. Anschliessend wird, in Flußrichtung des Abwassers gesehen, in der zweiten Kammer 13 ein TS-Gehalt von etwa 15 g/1 weiterhin in der nachfolgenden dritten Kammer 14 ein TS-Gehalt von etwa 10 g/l, sodann in der folgenden Kammer 15 ein TS-Gehalt von 5 g/l und schließlich in der vorletzten Kammer 16 ein TS-Gehalt von 1-2 g/l und ein $O_2$-Gehalt von 3 - 5 mg/l eingestellt bzw. aufrechterhalten. Dieser Zustand wird praktisch auch in der letztem Kammer 17 vor dem Auslaßende 3 eingehalten. Wesentlich ist hierbei ferner, daß der $O_2$-Gehalt in den Kammern 12 bis 17 gleichbleibt, oder aber in Richtung zum Auslaßende 3 des Beckens 1 hin zunimmt, und etwa, wie bereits erwähnt, auf einen Wert von 3 bis 5 mg/l gebracht wird.

Da der $O_2$-Gehalt mittels der Meßfühler 27 bzw. 28 in der ersten Kammer 12 bzw. in der vorletzten Kammer 16 laufend ermittelt wird, kann die $O_2$- bzw. Luftzufuhr in Abhängigkeit von den jeweiligen Meßwerten gesteuert werden, um die oben erwähnten Sollwerte zu erreichen bzw. einzuhalten. In bevorzugter Weise können die $O_2$-Konzentrationen in den einzelnen Kammern 12 bis 17 in Abhängigkeit von den jeweils vorherrschenden Bakterienkulturen eingestellt werden.

Durch die bei der erfindungsgemäßen Vorrichtung vorgesehenen Trennwände 5 aus technischen Geweben (Filtergeweben) 7 wird vor allem auch der Vorteil erreicht, daß sich an den Trennwänden 5 sogenannte "biologische Rasen" durch die im Belebtschlamm enthaltenen Bakterien bilden können; derartige Erscheinungen kennt man ansich von Tropfkörpern her.

Durch die Bildung dieser biologischen Rasen entsteht eine zusätzliche Reinigungswirkung, wobei die Schlammteilchen zwar vom Filtergewebe zurückgehalten werden, das Wasser jedoch durch den biologischen Rasen hindurchgeht.

Im übrigen werden bei der erfindungsgemäßen Vorrichtung Stoßbelastungen bzw. Belastungen durch Schwankungen in der ersten Kammer 12 durch die dort vorherrschenden Bakterienstämme aufgefangen, die weitgehend restistent sind und hohe Teilungsraten aufweisen.

Im übrigen besteht eine weitere Ausbildung der Vorrichtung nach der Erfindung darin, daß für jede einzelne Kammer 12 bis 17 des Belüftungsbeckens 1 $O_2$-Meßgeräte vorgesehen sind, um in jeder Kammer einen Soll-Istwert-Vergleich bezüglich der jeweiligen $O_2$-Konzentration durchführen zu können.

Die Erfindung ist nicht auf die dargestellten und beschriebenen Ausführungsbeispiele beschränkt, sie umfasst auch alle fachmännischen Abwandlungen und Weiterbildungen sowie alle Teil- und Unterkombinationen der beschriebenen und/oder dargestellten Merkmale und Maßnahmen.

– 14 –

Patentansprüche:

1. Vorrichtung zum biologischen Reinigen von Abwasser nach dem Belebtschlamm-Verfahren mit einem Belüftungsbecken (1), wobei das Becken (1) eine längliche rechteckige Form aufweist, mit einem Einlaß- (2) und Auslaßende (3), Zufuhreinrichtungen (4) für Abwasser und eine Anzahl von Belüftungseinrichtungen längs des Beckens (1) zwischen Einlaß- (2) und Auslaßende (3) angeordnet zum Belüften des über die Länge des Beckens (1) vom Einlaßende (2) zum Auslaßende (3) strömenden Abwassers und einer Anzahl Trennwände (5), dadurch gekennzeichnet, daß die Trennwände (5) aus einem auf Rahmen (6) gespannten technischen Gewebe (Filtergewebe) (7) bestehen, daß die das technische Gewebe (7) spannenden Rahmen (6) höhenverstellbar , quer zur Strömungsrichtung des Abwassers je über die gesamte Breite des Beckens (1) reichend angeordnet sind, daß zwischen Unterkante der höhenverstellbaren Trennwand (5) und dem Boden (10) des Belebtschlammbeckens (1) ein einstellbarer Durchflußquerschnitt für das Abwasser freibleibt, daß die Rahmen 6 gegenüber den Beckenseitenwänden (8', 8'') Dichtungsmittel (9) aufweisen, daß die Belüftungsmittel aus am Boden (10) des Beckens (1) angeordneten Plattenbelüftern (11) bestehen, die zumindest über den ganzen Querschnitt des Beckens (1) eine gleichmäßige, feinblasige $O_2$- bzw. Luftzufuhr ermöglichen, und daß die Abstände zwischen den aufeinanderfolgenden Trennwänden (5) im wesentlichen gleich groß gewählt sind, derart, daß in Flußrichtung des Abwassers in durch die Trennwände (5) gebildeten Kammern (12 bis 17) der $O_2$-Gehalt gleichbleibt oder stufenweise zunimmt und der Trockensubstanzgehalt stufenweise ab-

- 15 -

nimmt.

2. Vorrichtung nach Anspruch 1, dadurch gekennzeichnet, daß der Abstand der letzten Trennwand ($5^V$) in Flußrichtung des Abwassers vor dem Ablaufende (3) zur Beckenstirnwand (18) kleiner ist als der Abstand zur vorhergehenden Trennwand ($5^{IV}$).

3. Vorrichtung nach Anspruch 1 oder 2, dadurch gekennzeichnet, daß die das technische Gewebe (7) spannenden Rahmen (6) an den Seitenlängskanten gummielastische Dichtungslippen (19) aufweisen.

4. Vorrichtung nach Anspruch 1 oder 2, gekennzeichnet durch U-förmige Führungsprofile (20) an den Seitenwänden (8', 8'') des Beckens (1) für die auf Rahmen (6) gespannten technischen Geweben (7) als Trennwände (5).

5. Vorrichtung nach Anspruch 1 oder folgenden, dadurch gekennzeichnet, daß die Seitenwände (8) des Beckens (1) in Abständen mit Rastausnehmungen (22) zum Einhängen der Trennwand-Rahmen (6) versehen sind.

6. Vorrichtung nach Anspruch 1 oder folgenden, gekennzeichnet durch Stellmotore 23 zur Höhenverstellung der Trennwände (5) sowie durch kraftschlüssig zusammenwirkende Antriebsmittel (24, 25) am Stellmotor (23) und Trennwand-Rahmen (6).

7. Vorrichtung nach Anspruch 1 oder folgenden, dadurch gekennzeichnet, daß die Plattenbelüfter (11) in den einzelnen durch die Trennwände (5) gebildeten Kammern (12 bis 17) jeweils getrennte, steuerbare $O_2$- bzw.

Luftzufuhrvorrichtungen (26) aufweisen.

8. Vorrichtung nach Anspruch 1 oder folgenden, dadurch gekennzeichnet, daß wenigstens in der ersten Kammer (12) und/oder letzten (17) der durch die Trennwände (5) gebildeten Kammern (12 bis 17) Meßgeräte (27 bzw.28) für den $O_2$-Gehalt des Abwassers angeordnet sind.

9. Vorrichtung nach Anspruch 1 oder folgenden, gekennzeichnet durch mindestens eine oberhalb der ersten Kammer (12) in Fließrichtung des Abwassers angeordnete Sprüh- bzw. Spritzvorrichtung (29) zur Vermeidung bzw. Beseitigung einer Schaumbildung.

10. Verfahren zum Betrieb einer biologischen Abwasser-Reinigungsanlage mit mehrstufigen Belebtschlammbecken, insbesondere einer Vorrichtung nach einem oder mehreren der Ansprüche 1 bis 9, dadurch gekennzeichnet, daß in einer in Flußrichtung des Abwassers gesehenen ersten Kammer ein TS-Gehalt von etwa 20 g/l durch Steuerung der $O_2$- bzw. Luftzufuhr und durch Steuerung des Durchflußweges von der ersten Kammer zu einer zweiten Kammer, daß in einer nachfolgenden zweiten Kammer ein herabgesetzter TS-Gehalt (etwa 15 g/l), daß in einer nachfolgenden dritten Kammer ein noch weiter herabgesetzter TS-Gehalt (etwa 10 g/l) und daß schließlich in der letzten Kammer vor dem Ablaufende ein TS-Gehalt von 1 - 2 g/l eingestellt bzw. aufrechterhalten wird, wobei der $O_2$-Gehalt in den Kammern gleichbleibt oder in Richtung zum Ablaufende zunimmt.

11. Verfahren nach Anspruch 10, dadurch gekennzeichnet, daß der $O_2$-Gehalt in den Kammern, insbesondere in der ersten und/oder letzten Kammer gemessen und die $O_2$- bzw. Luftzufuhr in Abhängigkeit von den Meßwerten gesteuert wird, um die Sollwerte zu erreichen bzw. zu halten.

12. Verfahren nach Anspruch 10 bzw. 11, dadurch gekennzeichnet, daß die $O_2$-Gehalte der einzelnen Kammern in Abhängigkeit von jeweils vorherrschenden Bakterienkulturen eingestellt werden.

FIG.1

FIG.2

FIG.3

FIG.4

FIG.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,X | DE-U-7 321 776 (A. GRÜNEWALD) <br> * Seite 7 - Seite 8, Zeile 11; Seite 4, Zeilen 19-22 * <br> --- | 1,2,6 | C 02 F 3/12 <br> C 02 F 3/06 <br> C 02 F 3/10 |
| X | DE-A-1 952 699 (M. NEUMANN) <br> * Seite 10, Ansprüche 1-5; Seite 11, Anspruch 8 * <br> --- | 1 | |
| A | DE-A-2 414 255 (E. ASSENDORF) <br> * Seiten 7,8; Ansprüche 1-4 * <br> --- | 1,10 | |
| A | US-A-3 872 003 (CHICAGO BRIDGE) <br><br> * Spalte 5, Zeilen 23-53 * <br> --- | 1,7,8, 10,11 | |
| A | CH-A- 400 025 (METALLHÜTTENWERKE LÜBECK) <br> * Seite 1, Zeilen 60-66 * <br> --- | | RECHERCHIERTE SACHGEBIETE (Int. Cl. ³) |
| A | FR-A- 795 834 (SOCIETE AUXILAIRE) <br> * Seite 1, Zeile 47 * <br> --- | | C 02 F |
| D,A | DE-A-2 639 252 (AIR PRODUCTS) <br><br> --- | | |
| D,A | DE-A-2 532 682 (G. BISCHOFF BAU) <br><br> ----- | | |

Der vorliegende Recherchenbericht wurde für alle Patentansprüche erstellt.

| Recherchenort <br> DEN HAAG | Abschlußdatum der Recherche <br> 28-04-1982 | Prüfer <br> TEPLY J. |
|---|---|---|